# EUROPÄISCHE PATENTANMELDUNG

(11) **EP 4 047 201 A1**
(43) Veröffentlichungstag der Anmeldung: **24.08.2022**
(21) Anmeldenummer: 22151955.6
(22) Anmeldetag: 18.01.2022
(51) Int. Cl.: F02N 11/08, H02M 3/158

(54) **STARTSPANNUNGSMODUL FÜR EIN STARTERSYSTEM EINER BRENNKRAFTMASCHINE**

(30) Priorität: 22.02.2021 DE 102021104090
(71) Anmelder: Eberspächer Controls Landau GmbH & Co. KG, 76829 Landau (DE)
(72) Erfinder: Mandery, Dirk, Niederschlettenbach (DE)
(74) Vertreter: Ruttensperger Lachnit Trossin Gomoll

(57) **Zusammenfassung**

Ein Startspannungsmodul für ein Startersystem einer Brennkraftmaschine in einem Fahrzeug umfasst eine Spannungsquelle (20) zum Bereitstellen einer Versorgungsspannung, einen Massepotenzialanschluss (26) zum Anschließen des Startspannungsmoduls (16) an ein Massepotenzial (28), einen ersten Potenzialausgangsanschluss (30) zum Anschließen des Startspannungsmoduls (16) an ein Startersystem (12) einer Brennkraftmaschine sowie einen Abwärtswandler (40) zwischen der Spannungsquelle (20) und dem ersten Potenzialanschluss (30) zum Bereitstellen einer bezüglich der Versorgungsspannung geminderten Starterspannung am ersten Potenzialanschluss (30).

## Beschreibung

Die vorliegende Erfindung betrifft ein Startspannungsmodul für ein Startersystem einer Brennkraftmaschine, welches beispielsweise in einem Fahrzeug dazu eingesetzt werden kann, die zum Erregen eines Starters eines Startersystems zum Anlassen einer Brennkraftmaschine erforderliche Starterspannung bereitzustellen.

In Fahrzeugen vorgesehene Brennkraftmaschinen werden im Allgemeinen durch elektromotorisch arbeitende Starter gestartet. Dabei wird im Startzustand, also beim Anlassen einer Brennkraftmaschine, eine von einer Spannungsquelle, zum Beispiel einer Blei-Batterie oder einer Lithium-Ionen-Batterie, bereitgestellte Versorgungsspannung von beispielsweise 12 V über einen im Startbetriebszustand zu schließenden bzw. geschlossen zu haltenden Starterschalter an einen ersten Starteranschluss des Starters angelegt. Ein zweiter Starteranschluss des Starters kann an das Massepotenzial des Fahrzeugs angeschlossen sein, so dass durch die am Starter anliegende elektrische Spannung bzw. den durch die Starterwicklung fließenden elektrischen Strom im Starter ein die Brennkraftmaschine hochdrehendes Drehmoment erzeugt wird. Da am Beginn des Startvorgangs der Starter in Ruhe ist, fließt aufgrund in diesem Zustand im Wesentlichen noch nicht vorhandener Gegeninduktion und aufgrund des vergleichsweise geringen ohmschen Widerstandes der Starterwicklung ein sehr hoher elektrischer Strom beispielsweise von bis zu 1000 A durch die Starterwicklung des Starters. Dies führt aufgrund des in diesem Zustand im Wesentlichen vollständig in der Spannungsquelle auftretenden Spannungsabfalls zu einer sehr hohen Belastung der Spannungsquelle und kann insbesondere auch zu einer magnetischen Übersättigung des Starters führen, mit der weiteren Folge der Gefahr eines Spannungseinbruchs im Bordspannungssystem und eines vergleichsweise geringen Wirkungsgrades im Startbetriebszustand.

Es ist die Aufgabe der vorliegenden Erfindung, ein Startspannungsmodul für ein Startersystem einer Brennkraftmaschine in einem Fahrzeug vorzusehen, mit welchem ein effizienter Startbetrieb bei geringer Belastung einer eine Versorgungsspannung für den Starter bereitstellenden Spannungsquelle erreicht wird.

Erfindungsgemäß wird diese Aufgabe gelöst durch ein Startspannungsmodul für ein Startersystem einer Brennkraftmaschine gemäß Anspruch 1. Das Startspannungsmodul umfasst eine Spannungsquelle zum Bereitstellen einer Versorgungsspannung, einen Massepotenzialanschluss zum Anschließen des Startspannungsmoduls an ein Massepotenzial, einen ersten Potenzialausgangsanschluss zum Anschließen des Startspannungsmoduls an ein Startersystem einer Brennkraftmaschine sowie einen Abwärtswandler zwischen der Spannungsquelle und dem ersten Potenzialanschluss zum Bereitstellen einer bezüglich der Versorgungsspannung geminderten Starterspannung am ersten Potenzialanschluss.

Durch das Einsetzen eines allgemein auch als Buck-Converter bezeichneten Abwärtswandlers kann im Wesentlichen ohne Energieverluste für den Starter eine im Vergleich zur Versorgungsspannung der Spannungsquelle verringerte Startbetriebsspannung bereitgestellt werden, welche insbesondere auch in einer Anfangsphase des Startbetriebs das Auftreten eines übermäßig hohen elektrischen Stroms und somit eine übermäßige Belastung der Spannungsquelle ebenso wie die Gefahr eines Spannungseinbruchs in einem Bordspannungssystem vermeidet. Aufgrund der geringeren Belastung der Spannungsquelle besteht damit die Möglichkeit, eine kleiner dimensionierte Spannungsquelle einzusetzen, ohne diese und auch den Starter einer übermäßigen Belastung auszusetzen. Aufgrund der erhöhten Betriebssicherheit, insbesondere der erhöhten Spannungs-Sicherheit für ein Bordspannungssystem, besteht somit eine ASIL-Fähigkeit, so dass ein erfindungsgemäß aufgebautes Startersystem insbesondere auch für den Einsatz in Hybridfahrzeugen geeignet ist. Da bei dem erfindungsgemäß aufgebauten Startspannungsmodul ein derartiger Abwärtswandler in dieses als Ausgangsspannung die zum Erregen eines Starters erforderliche Starterspannung bereitstellende Modul integriert ist, sind an einem Fahrzeug selbst keine weiteren baulichen Maßnahmen erforderlich, um die zum Vermeiden einer Überlastung der Spannungsquelle führende Funktionalität bereitstellen zu können. Das erfindungsgemäß aufgebaute Startspannungsmodul, welches selbst die Spannungsquelle bereitstellt bzw. enthält, kann anstelle einer konventionellen Spannungsquelle, beispielsweise einer Lithium-Ionen-Batterie, in ein Fahrzeug integriert werden.

Um vermittels des erfindungsgemäßen Startspannungsmoduls auch andere an ein Bordspannungssystem eines Fahrzeugs angeschlossene Verbraucher elektrischer Energie im Betrieb eines Fahrzeugs speisen zu können, kann bei dem Startspannungsmodul wenigstens ein zweiter Potenzialanschluss vorgesehen sein zum Anschließen des Startspannungsmoduls an ein Bordspannungssystem eines Fahrzeugs zum Bereitstellen einer Bordspannung für das Bordspannungssystem.

Der in das Startspannungsmodul integrierte Abwärtswandler kann umfassen:
- eine erste Schaltereinheit mit einem ersten Schalteranschluss und einem zweiten Schalteranschluss, wobei der erste Schalteranschluss der ersten Schaltereinheit mit einem ersten Spannungsquellenanschluss der Spannungsquelle verbunden ist,
- eine Wandlerinduktivität mit einem ersten Wandlerinduktivitätanschluss und einem zweiten Wandlerinduktivitätanschluss, wobei der erste Wandlerinduktivitätanschluss mit dem zweiten Schalteranschluss der ersten Schaltereinheit verbunden ist und der zweite Wandlerinduktivitätanschluss mit dem ersten Potenzialanschluss verbunden ist.
- eine Kondensatoreinheit mit einem ersten Kondensatoreinheitanschluss und einem zweiten Kondensatoreinheitanschluss, wobei der erste Kondensatoreinheitsanschluss mit dem zweiten Wandlerinduktivitätanschluss und dem ersten Potenzialanschluss verbunden ist und der zweite Kondensatoreinheitsanschluss mit einem zweiten Spannungsquellenanschluss der Spannungsquelle und dem Massepotenzialanschluss verbunden ist.

Ferner kann der Abwärtswandler eine zweite Schaltereinheit mit einem ersten Schalteranschluss und einem zweiten Schalteranschluss umfassen, wobei der erste Schalteranschluss der zweiten Schaltereinheit mit dem zweiten Schalteranschluss der ersten Schaltereinheit und dem ersten Wandlerinduktivitätanschluss verbunden ist und der zweite Schalteranschluss der zweiten Schaltereinheit mit dem zweiten Spannungsquellenanschluss und dem Massepotenzialanschluss verbunden ist.

Unter Berücksichtigung der im Startbetriebszustand fließenden vergleichsweise hohen elektrischen Ströme von bis zu einigen 100 A wird vorgeschlagen, dass die erste Schaltereinheit wenigstens einen ersten MOSFET-Schalter umfasst, wobei ein Drain-Anschluss des wenigstens einen ersten MOSFET-Schalters den ersten Schalteranschluss der ersten Schaltereinheit bereitstellt und ein Source-Anschluss des wenigstens einen ersten MOSFET-Schalters den zweiten Schalteranschluss der ersten Schaltereinheit bereitstellt, oder/und dass die zweite Schaltereinheit wenigstens einen zweiten MOSFET-Schalter umfasst, wobei ein Drain-Anschluss des wenigstens einen zweiten MOSFET-Schalters den ersten Schalteranschluss der zweiten Schaltereinheit bereitstellt und ein Source-Anschluss des wenigstens einen zweiten MOSFET-Schalters den zweiten Schalteranschluss der zweiten Schaltereinheit bereitstellt.

Um durch aufeinander abgestimmtes Öffnen und Schließen der Schaltereinheiten eine bezüglich der Versorgungsspannung der Spannungsquelle gesenkte Startbetriebsspannung bereitstellen zu können, ohne dabei einen elektrischen Kurzschluss über die Schaltereinheiten zu erzeugen, wird vorgeschlagen, dass eine Ansteuereinheit vorgesehen ist zum wahlweisen Öffnen und Schließen der ersten Schaltereinheit und der zweiten Schaltereinheit im Startbetriebszustand derart, dass im Wesentlichen nur dann, wenn die erste Schaltereinheit geöffnet ist, die zweite Schaltereinheit geschlossen ist, und im Wesentlichen nur dann, wenn die zweite Schaltereinheit geöffnet ist, die erste Schaltereinheit geschlossen ist.

Der erste Spannungsquellenanschluss kann ein Pluspol der als Spannungsquelle ausgebildeten Spannungsquelle sein, und der zweite Spannungsquellenanschluss kann ein Minuspol der Spannungsquelle ist.

Zum Speichern von Energie in dem Startspannungsmodul kann die die Spannungsquelle wenigstens eine Gleichspannungsbatterie, wie zum Beispiel Lithium-Ionen-Batterie oder Bleiakkumulator oder dergleichen, mit einer oder mehreren Batteriezellen umfassen. Alternativ oder zusätzlich kann die Spannungsquelle ein Kondensatorsystem, zum Beispiel sogenannte Super-Kondensatoren oder Ultra-Kondensatoren (UCAPs), umfassen.

Die Erfindung betrifft ferner eine Starteranordnung für eine Brennkraftmaschine umfassend ein erfindungsgemäß aufgebautes Startspannungsmodul und ein Startersystem mit einem Starter und einem Starterschalter zum wahlweisen Anlegen der Starterspannung an den Starter.

Zur Verbindung des Startersystems mit dem Startspannungsmodul kann der Starterschalter einen ersten Schalteranschluss und einen zweiten Schalteranschluss aufweisen, wobei der erste Schalteranschluss des Starterschalters mit dem ersten Potenzialanschluss verbunden ist und der zweite Schalteranschluss des Starterschalters mit einem ersten Starteranschluss des Starters verbunden ist und ein zweiter Starteranschluss des Starters mit dem Massepotenzial verbunden ist.

Die vorliegende Erfindung wird nachfolgend mit Bezug auf die beiliegenden Figuren detailliert beschrieben, welche ein vereinfachtes Schaltbild einer Starteranordnung mit einem Startspannungsmodul und einem Startersystem zum Starten einer Brennkraftmaschine eines Fahrzeugs darstellt.

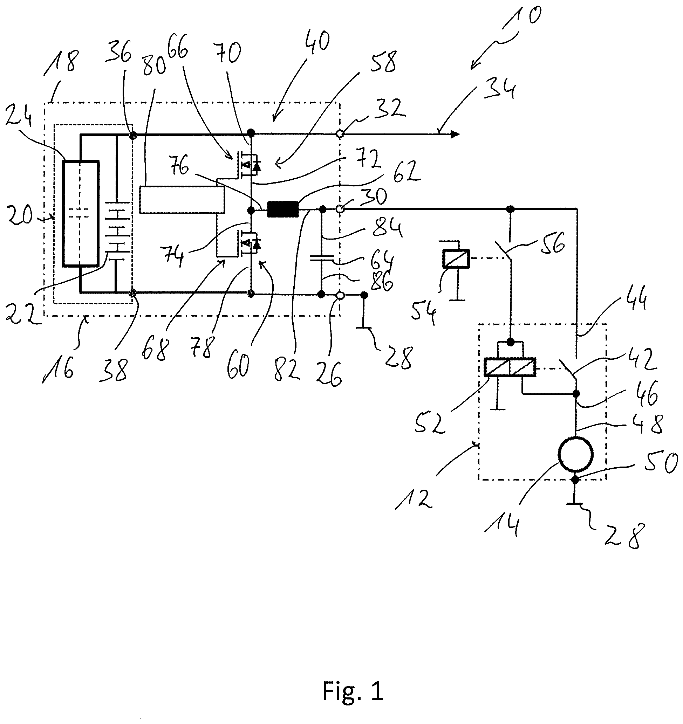

In Fig. 1 ist eine Starteranordnung in einem Fahrzeug allgemein mit 10 bezeichnet. Das Startersystem 10 umfasst ein Startersystem 12 mit einem einen elektromotorisch arbeitenden Starter 14 mit einer durch Anlegen einer Starterspannung zu erregenden Starterwicklung. Der Starter 14 erzeugt im Startbetriebszustand ein Drehmoment, durch welches eine mit der Startersystem 12 zu startende bzw. anzulassende Brennkraftmaschine hochgedreht wird.

Die Starteranordnung 10 umfasst ferner ein Startspannungsmodul 16, welches in einem Fahrzeug die Funktion einer darin herkömmlicherweise vorgesehenen Gleichspannungsquelle übernimmt und somit auch die zum Betreiben des Starters 14 erforderliche Starterspannung bereitstellt.

Das Startspannungsmodul 16 umfasst in einem Modulgehäuse 18 eine allgemein mit 20 bezeichnete Spannungsquelle. Die Spannungsquelle 20 kann beispielsweise eine Gleichspannungsbatterie 22, beispielsweise Lithium-Ionen-Batterie mit einer bzw. mehreren Batteriezellen, umfassen. Alternativ oder parallel zu der Gleichspannungsbatterie 22 kann die Spannungsquelle 20 ein allgemein auch als Ultra-Kondensatoren oder Super-Kondensatoren bezeichnetes Kondensatorsystem 24 umfassen, in welchem Energie gespeichert und bei Bedarf als Gleichspannung bereitgestellt bzw. abgegeben werden kann.

Das Startspannungsmodul 16 umfasst beispielsweise an dem Modulgehäuse 18 einen Massepotentialanschluss 26, mit welchem das Startspannungsmodul 16 an das Massepotential 28 eines Fahrzeugs angeschlossen werden kann. Das Startspannungsmodul 26 weist ferner einen ersten Potenzialanschluss 30 auf, an welchen in nachfolgend beschriebener Art und Weise das Startersystem 12 angeschlossen wird, um die zum Erregen des Starters 14 erforderliche Starterspannung an diesen anlegen zu können.

Das Startspannungsmodul 16 umfasst ferner wenigstens einen zweiten Potenzialanschluss 32, an den ein Bordspannungssystem 34 mit einer Mehrzahl von mit elektrischer Energie zu speisenden Verbrauchern angeschlossen werden kann. Der zweite Potenzialanschluss 32 kann beispielsweise direkt mit einem durch einen Pluspol bereitgestellten ersten Spannungsquellenanschluss 36 der Spannungsquelle 20 verbunden sein. Ein durch einen Minuspol bereitgestellter zweiter Spannungsquellenanschluss 38 der Spannungsquelle 20 kann beispielsweise direkt mit dem Massepotentialanschluss 26 verbunden sein.

In dem Startspannungsmodul 16 ist ferner ein allgemein auch als Buck-Converter bezeichneter Abwärtswandler 40 vorgesehen, durch welchen in nachfolgend noch beschriebener Art und Weise am ersten Potenzialanschluss 30 eine bezüglich der durch die Spannungsquelle 20 zwischen den beiden Spannungsquellenanschlüssen 36, 38 bereitgestellten Versorgungsspannung von beispielsweise 12V, 24V oder 48V geminderte Spannung als Starterspannung zum Betreiben des Starters 14 beim Anlassen einer Brennkraftmaschine bereitgestellt wird. Diese am ersten Potenzialanschluss 30 bzw. als Potenzialdifferenz zwischen dem ersten Potenzialanschluss 30 und dem Massepotenzialanschluss 26 bereitgestellte Starterspannung wird über den ersten Potenzialanschluss 30 und einen Starterschalter 42 an den Starter 14 angelegt. Dazu weist der Starterschalter 42 einen ersten Schalteranschluss 44 auf, welcher über eine entsprechende Leitungsverbindung an den ersten Potentialanschluss 30 angeschlossen ist. Ein zweiter Schalteranschluss 46 des Starterschalters 42 ist mit einem ersten Starteranschluss 48 des Starters 14 verbunden, mit welchem auch die im Inneren des Starters 14 vorgesehene Starterwicklung verbunden ist. Ein gleichermaßen mit der Starterwicklung des Starters 14 verbundener zweiter Starteranschluss 50 ist mit dem Massepotenzial 28 eines Fahrzeugs verbunden.

Durch Öffnen und Schließen des Starterschalters 42 vermittels einer diesem zugeordneten Starterrelais 52 wird der erste Starteranschluss 48 wahlweise außer Verbindung bzw. in Verbindung mit dem ersten Potenzialanschluss 30 gebracht, so dass bei geschlossenem Starterschalter 42 die am ersten Potenzialanschluss 30 bereitgestellte Starterspannung am ersten Starteranschluss 48 und somit der Starterwicklung anliegt. Um dieses Öffnen und Schließen des Starterschalters 42 vermittels eines Starterrelais 52 auszulösen, ist diesem ein Steuerrelais 54 zugeordnet, durch welches bei Erzeugung eines Startbefehls ein Steuerschalter 56 in seinen Schließzustand gebracht wird und somit die am ersten Potenzialanschluss 30 bereitgestellte Starterspannung dazu genutzt wird, vermittels des mit dieser Spannung beaufschlagten Schalters 52 den Starterschalter 42 zu schließen bzw. geschlossen zu halten, solange vermittels des Steuerrelais 54 der Steuerschalter 56 in seinem Schließzustand gehalten ist.

Der im Startspannungsmodul 16 vorgesehene Abwärtswandler 40 umfasst zwei zwischen dem ersten Spannungsquellenanschluss 36 und dem zweiten Spannungsquellenanschluss 38 seriell geschaltete Schaltereinheiten 58, 60, eine Wandlerinduktivität 62 mit zumindest einer Spule bzw. Wicklung und eine Kondensatoreinheit 64 mit wenigstens einem Kondensator. Jede der beiden Schaltereinheiten 58, 60 umfasst einen, optional auch mehrere zueinander parallel geschaltete MOSFET-Schalter 66 bzw. 68. Ein erster Schalteranschluss 70 der ersten Schaltereinheit 58 ist mit dem ersten Spannungsquellenanschluss 36 verbunden und ist im dargestellten Beispiel durch einen Drain-Anschluss des ersten MOSFET-Schalters 66 bereitgestellt. Ein zweiter Schalteranschluss 72 der ersten Schaltereinheit 58 ist mit einem ersten Schalteranschluss 74 der zweiten Schaltereinheit 60 und einem ersten Wandlerinduktivitätanschluss 76 der Wandlerinduktivität 62 verbunden. Dabei ist im dargestellten Ausgestaltungsbeispiel der zweite Schalteranschluss 72 der ersten Schaltereinheit 58 durch einen Source-Anschluss des ersten MOSFET-Schalters 66 bereitgestellt, während der erste Schalteranschluss 74 der zweiten Schaltereinheit 60 durch einen Drain-Anschluss des zweiten MOSFET-Schalters 68 bereitgestellt ist. Ein zweiter Schalteranschluss 78 der zweiten Schaltereinheit 60 ist im dargestellten Ausgestaltungsbeispiel durch den Source-Anschluss des zweiten MOSFET-Schalters 68 bereitgestellt und ist mit dem zweiten Spannungsquellenanschluss 38 bzw. dem Massepotenzialanschluss 26 des Startspannungsmoduls 16 und über diesen mit dem Massepotenzial 28 verbunden. Vermittels einer die Gate-Anschlüsse der beiden MOSFET-Schalter 66, 68 ansteuernden Ansteuereinheit 80 können die beiden Schaltereinheiten 58, 60 in nachfolgend beschriebener Art und Weise aufeinander abgestimmt geöffnet bzw. geschlossen werden.

Ein zweiter Wandlerinduktivitätanschluss 82 ist mit dem ersten Potenzialanschluss 30 und einem ersten Kondensatoreinheitanschluss 84 verbunden. Ein zweiter Kondensatoreinheitanschluss 84 ist mit dem zweiten Schalteranschluss der zweiten Schaltereinheit 60 und dem zweiten Spannungsquellenanschluss 38 und somit auch dem Massepotentialanschluss 26 des Startspannungsmoduls 16 verbunden.

Zum Anlassen einer Brennkraftmaschine wird bei Erzeugung eines entsprechenden Startbefehls zunächst durch das Steuerrelais 54 der Steuerschalter 56 in seine Schließstellung gebracht und somit die am ersten Potenzialanschluss 30 bereitgestellte Starterspannung an das Starterrelais 52 angelegt, wodurch der Starterschalter 42 geschlossen wird. Damit liegt die Starterspannung auch am ersten Starteranschluss 48 und somit der Starterwicklung an. In diesem Zustand kann beispielsweise die Starterspannung der durch die Spannungsquelle 20 bereitgestellten Versorgungsspannung entsprechen, wozu beispielsweise die erste Schaltereinheit 48 in ihren Schließzustand geschaltet wird und die zweite Schaltereinheit 60 in ihren Offenzustand geschaltet wird. Soll bereits am Beginn eines Startvorgangs die an den Starter 14 angelegte Starterspannung unter der durch die Spannungsquelle 20 bereitgestellten Versorgungsspannung zwischen den beiden Spannungsquellenanschlüssen 36, 38 liegen, werden die beiden Schaltereinheiten 58, 60 derart getaktet wechselweise geöffnet und geschlossen, dass immer nur einer der beiden Schaltereinheiten 58, 60 in ihrem Schließzustand, also ihrem leitenden Zustand ist, während die andere der beiden Schaltereinheiten dann in ihrem Offenzustand, also in ihrem nichtleitenden und im Wesentlichen als Diode wirkenden Zustand ist.

Im Verlaufe des Startvorgangs wird der Stromfluss durch den Starter 14 bzw. dessen Starterwicklung überwacht. Wird das Erreichen einer Startstromschwelle im Bereich von etwa 300A erkannt, werden die beiden Schaltereinheiten 58, 60 wechselweise derart angesteuert, dass die am ersten Potenzialanschluss 30 anliegende resultierende Spannung und damit der durch den Starter 14 bzw. dessen Wicklung fließende Strom abnimmt und somit derart reguliert wird, dass dieser in einem für den durchzuführenden Startvorgang geeigneten Bereich liegt. Durch das unter Berücksichtigung des Starterstroms durchgeführte und angepasste alternierende Öffnen und Schließen der Schaltereinheiten 58, 60 wird an dem ersten Potenzialanschluss 30 eine der Starterspannung entsprechende mittlere Spannung bereitgestellt, die unter der durch die Spannungsquelle 20 bereitgestellten Versorgungspannung liegt. Es wird daher eine dynamische Anpassung des Lastwiderstands des Starters 12 an dem Innenwiderstand der Spannungsquelle 14 erreicht. Gleichzeitig wird ein übermäßig hoher Stromfluss durch den Starter 14 vermieden, wodurch auch eine Überlastung der Spannungsquelle 20, bedingt durch einen aufgrund des inneren Widerstandes derselben auftretenden Spannungsabfall, verhindert wird.

Mit dem erfindungsgemäßen Aufbau des Startspannungsmoduls 16, welches als solches Modul in ein Fahrzeug anstelle einer üblicherweise eingesetzten Spannungsquelle integriert werden kann, wird im Startbetrieb des Startersystems 12 die Belastung der Spannungsquelle 20 vergleichsweise nieder gehalten. Dies ermöglicht es, die Spannungsquelle kleiner zu dimensionieren als eine üblicherweise eingesetzte Batterie, was hinsichtlich der Kosten und auch des Gewichts vorteilhaft ist. Da im Startbetrieb des Startersystems 12 ein übermäßig hoher Stromfluss durch den Starter 14 und ein dadurch möglicherweise ausgelöster Spannungseinbruch vermieden wird, ist eine höhere Spannungs-Sicherheit und somit eine ASIL-Fähigkeit der Starteranordnung 10 erreichbar. Diese kann somit auch in Hybridfahrzeugen eingesetzt werden, bei welchen im Start-Stopp-Betrieb bzw. beim Übergang zwischen einem elektromotorischen Betrieb und einem Verbrennungsbetrieb wiederholt Startvorgänge durchzuführen sind.

Gleichzeitig kann das Startspannungsmodul 16 als Spannungsquelle für ein Bordspannungssystem genutzt werden, welches an einem oder mehreren der zweiten Potenzialanschlüsse 32 beispielsweise verschiedene Spannungsniveaus, diese generiert auf der Grundlage der Versorgungsspannung der Spannungsquelle 20, am Startspannungsmodul 16 abgreifen kann.

## Patentansprüche

1. Startspannungsmodul für ein Startersystem einer Brennkraftmaschine in einem Fahrzeug, umfassend eine Spannungsquelle (20) zum Bereitstellen einer Versorgungsspannung, einen Massepotenzialanschluss (26) zum Anschließen des Startspannungsmoduls (16) an ein Massepotenzial (28), einen ersten Potenzialausgangsanschluss (30) zum Anschließen des Startspannungsmoduls (16) an ein Startersystem (12) einer Brennkraftmaschine sowie einen Abwärtswandler (40) zwischen der Spannungsquelle (20) und dem ersten Potenzialanschluss (30) zum Bereitstellen einer bezüglich der Versorgungsspannung geminderten Starterspannung am ersten Potenzialanschluss (30).

2. Startspannungsmodul nach Anspruch 1, **dadurch gekennzeichnet, dass** wenigstens ein zweiter Potenzialanschluss (32) vorgesehen ist zum Anschließen des Startspannungsmoduls (16) an ein Bordspannungssystem (34) eines Fahrzeugs zum Bereitstellen einer Bordspannung für das Bordspannungssystem (34).

3. Startspannungsmodul nach 1 oder 2 **dadurch gekennzeichnet, dass** der Abwärtswandler (40) umfasst:
- eine erste Schaltereinheit (58) mit einem ersten Schalteranschluss (70) und einem zweiten Schalteranschluss (72), wobei der erste Schalteranschluss (70) der ersten Schaltereinheit (58) mit einem ersten Spannungsquellenanschluss (36) der Spannungsquelle (20) verbunden ist,
- eine Wandlerinduktivität (62) mit einem ersten Wandlerinduktivitätanschluss (76) und einem zweiten Wandlerinduktivitätanschluss (82), wobei der erste Wandlerinduktivitätanschluss (76) mit dem zweiten Schalteranschluss (72) der ersten Schaltereinheit (58) verbunden ist und der zweite Wandlerinduktivitätanschluss (82) mit dem ersten Potenzialanschluss (30) verbunden ist,
- eine Kondensatoreinheit (64) mit einem ersten Kondensatoreinheitanschluss (84) und einem zweiten Kondensatoreinheitanschluss (86), wobei der erste Kondensatoreinheitsanschluss (84) mit dem zweiten Wandlerinduktivitätanschluss (82) und dem ersten Potenzialanschluss (30) verbunden ist und der zweite Kondensatoreinheitsanschluss (86) mit einem zweiten Spannungsquellenanschluss (38) der Spannungsquelle (20) und dem Massepotenzialanschluss (26) verbunden ist.

4. Startspannungsmodul nach Anspruch 3, **dadurch gekennzeichnet, dass** der Abwärtswandler (40) eine zweite Schaltereinheit (60) mit einem ersten Schalteranschluss (74) und einem zweiten Schalteranschluss (78) umfasst, wobei der erste Schalteranschluss (74) der zweiten Schaltereinheit (60) mit dem zweiten Schalteranschluss (72) der ersten Schaltereinheit (58) und dem ersten Wandlerinduktivitätanschluss (76) verbunden ist und der zweite Schalteranschluss (78) der zweiten Schaltereinheit (60) mit dem zweiten Spannungsquellenanschluss (38) und dem Massepotenzialanschluss (26) verbunden ist.

5. Startspannungsmodul nach Anspruch 4, **dadurch gekennzeichnet, dass** die erste Schaltereinheit (58) wenigstens einen ersten MOSFET-Schalter (66) umfasst, wobei ein Drain-Anschluss des wenigstens einen ersten MOSFET-Schalters (66) den ersten Schalteranschluss (70) der ersten Schaltereinheit (58) bereitstellt und ein Source-Anschluss des wenigstens einen ersten MOSFET-Schalters (66) den zweiten Schalteranschluss (72) der ersten Schaltereinheit (58) bereitstellt, oder/und dass die zweite Schaltereinheit (60) wenigstens einen zweiten MOSFET-Schalter (68) umfasst, wobei ein Drain-Anschluss des wenigstens einen zweiten MOSFET-Schalters (68) den ersten Schalteranschluss (74) der zweiten Schaltereinheit (60) bereitstellt und ein Source-Anschluss des wenigstens einen zweiten MOSFET-Schalters (68) den zweiten Schalteranschluss (78) der zweiten Schaltereinheit (60) bereitstellt.

6. Startspannungsmodul nach Anspruch 4 oder 5, **dadurch gekennzeichnet, dass** eine Ansteuereinheit (80) vorgesehen ist zum wahlweisen Öffnen und Schließen der ersten Schaltereinheit (58) und der zweiten Schaltereinheit (60) im Startbetriebszustand derart, dass im Wesentlichen nur dann, wenn die erste Schaltereinheit (58) geöffnet ist, die zweite Schaltereinheit (60) geschlossen ist, und im Wesentlichen nur dann, wenn die zweite Schaltereinheit (60) geöffnet ist, die erste Schaltereinheit (58) geschlossen ist.

7. Startspannungsmodul nach einem der Ansprüche 3-6, **dadurch gekennzeichnet, dass** der erste Spannungsquellenanschluss (36) ein Pluspol der Spannungsquelle (20) ist und der zweite Spannungsquellenanschluss (28) ein Minuspol der Spannungsquelle (20) ist.

8. Startspannungsmodul nach einem der vorangehenden Ansprüche, **dadurch gekennzeichnet, dass** die Spannungsquelle (20) wenigstens eine Gleichspannungsbatterie (22) umfasst, oder/und dass die Spannungsquelle (20) ein Kondensatorsystem (24) umfasst.

9. Starteranordnung für eine Brennkraftmaschine in einem Fahrzeug, umfassend ein Startspannungsmodul (16) nach einem der vorangehenden Ansprüche und ein Startersystem (12) mit einem Starter (14) und einem Starterschalter (42) zum wahlweisen Anlegen der Starterspannung an den Starter (14).

10. Starteranordnung nach Anspruch 9, **dadurch gekennzeichnet, dass** der Starterschalter (42) einen ersten Schalteranschluss (44) und einen zweiten Schalteranschluss (46) aufweist, wobei der erste Schalteranschluss (44) des Starterschalters (42) mit dem ersten Potenzialanschluss (30) verbunden ist und der zweite Schalteranschluss (46) des Starterschalters (42) mit einem ersten Starteranschluss (48) des Starters (14) verbunden ist und ein zweiter Starteranschluss (50) des Starters (14) mit dem Massepotenzial verbunden ist.
